# EUROPÄISCHE PATENTSCHRIFT

(11) **EP 2 983 811 B1**
(45) Veröffentlichungstag und Bekanntmachung des Hinweises auf die Patenterteilung: **06.07.2016**
(21) Anmeldenummer: 14707097.3
(22) Anmeldetag: 25.02.2014
(51) Int. Cl.: B01F 7/00, B01F 7/06

(54) **VORRICHTUNG UND VERFAHREN ZUM JUSTIEREN VON RÜHRBLÄTTERN**
DEVICE AND METHOD FOR ADJUSTING STIRRING BLADES
DISPOSITIF ET PROCÉDÉ POUR AJUSTER DES PALES D'AGITATION

(30) Priorität: 09.04.2013 DE 102013103526
(43) Veröffentlichungstag der Anmeldung: 17.02.2016
(73) Patentinhaber: Sartorius Stedim Biotech GmbH, 37079 Göttingen (DE)
(72) Erfinder: REIF, Oscar-Werner, 30173 Hannover (DE); GRELLER, Gerhard, 37085 Göttingen (DE); HUSEMANN, Ute, 37079 Göttingen (DE); DREHER, Thomas, 37083 Göttingen (DE); SCHEIBE, Oliver, 31655 Stadthagen (DE)
(74) Vertreter: Stehl, Astrid
(86) Internationale Anmeldenummer: PCT/EP2014/000491
(87) Internationale Veröffentlichungsnummer: WO 2014/166566

(56) Entgegenhaltungen:
- DE-A1- 10 260 490
- DE-A1-102006 053 339
- GB-A- 634 486
- US-A- 5 997 253

## Beschreibung

### Gebiet der Erfindung

Die Erfindung betrifft eine Vorrichtung zum Justieren von Rührblättern an einer Rührblattaufnahme eines Rührers, die mit einer Rührblattachse in quer zu einer Rotationsachse angeordneten Aufnahmebohrungen der Rührblattaufnahme in einem vorgesehenen Anstellwinkel gegenüber einer quer zur Rotationsachse des Rührers angeordneten virtuellen Ebene fixierbar sind.

Weiterhin betrifft die Erfindung ein Verfahren zum Justieren von an einer Rührblattaufnahme eines Rührers anzuordnenden Rührblättern, die mit einer Rührblattachse in quer zu einer Rotationsachse angeordneten Aufnahmebohrungen der Rührblattaufnahme in einem vorgesehenen Anstellwinkel gegenüber einer quer zur Rotationsachse angeordneten virtuellen Ebene fixiert werden.

### Stand der Technik

Bei Bioreaktoren, die einen Rührer aufweisen, ist es notwendig, die Rührer, die ein an einer Rührerwelle angeordnetes Rührorgan umfassen, optimal auszulegen und genau zu montieren. Ein besonderer Aspekt bei der Montage ist die exakte Einstellung des Neigungs- oder Anstellwinkels der an einer Rührblattaufnahme anzuordnenden Rührblätter. Da an den Rührblättern des Rührers beim Rühren die höchste Winkelgeschwindigkeit vorliegt, liegen dort auch die höchsten Scherkräfte vor. Durch abweichende Winkel steigen die Scherkräfte dramatisch an, was zu einer Schädigung der zu kultivierenden Organismen führt. Insbesondere bei wieder verwendbaren Bioreaktoren müssen bei der Reinigung die Rührorgane immer wieder entfernt und neu an der Rührerwelle installiert werden. Das anschließende Einstellen des Anstellwinkels ist bisher ein schwieriger, zeitaufwendiger und kostenintensiver Vorgang.

Aus dem Datenblatt der Sartorius Stedim Biotech GmbH "Manual adjustment of 3-blade segment impeller to an angle of 30°" ist ein Verfahren zum Justieren von Rührblättern in einer Rührblattaufnahme bekannt, bei welchem zunächst manuell das Rührblatt mittels eines Schraubenziehers leicht in eine Gewindebohrung der Rührblattaufnahme eingeschraubt wird. Nachfolgend wird mit einem Winkelmesser der gewünschte Anstellwinkel des Rührblattes vorgegeben und das Rührblatt so entlang der den Winkel anzeigenden Einrichtung ausgerichtet, dass die Rührblattaufnahme parallel zum Winkelmesser ausgerichtet ist. Erst dann wird das Rührblatt in der Gewindebohrung in der gewünschten Position festgeschraubt. Die Prozedur wird nacheinander für die anderen Rührblätter wiederholt. Wenn alle Rührblätter im erforderlichen Anstellwinkel in die Rührblattaufnahme eingeschraubt sind, wird im letzten Schritt durch Auflegen der fertig montierten Rührblattaufnahme mit Rührblättern auf eine ebene Fläche geprüft, ob die Unterseite der Rührblattaufnahme parallel zu der ebenen Fläche ausgerichtet ist, wodurch sichergestellt wird, dass alle Rührblätter im gewünschten Anstellwinkel zur Rührblattaufnahme ausgerichtet sind.

Nachteilig dabei ist, dass die Justierung relativ zeitaufwendig und damit kostenintensiv ist. Außerdem ist die Justierung relativ ungenau.

Aus der DE 10 2006 053 339 A1 ist eine Rühreinrichtung für Fermenter bekannt, wobei Rührblätter über eine lösbare Steckverbindung mit einer auf einem Rührschaft bzw. Rotationsachse fixierten Rührblattaufnahme verbindbar sind. Das der Rührblattaufnahme zugewandte Ende eines Rührblatts weist einen Steckbolzen auf, der lösbar in einer Steckbolzenaufnahme der Rührblattaufnahme mittels einer Fixierschraube fixierbar ist. Der Anstellwinkel der Rührblätter bezüglich der Rotationsachse kann durch Lösen, Verdrehen und erneutes Fixieren des Steckbolzens in der Steckbolzenaufnahme variiert werden, wobei ein Winkel von 5 bis 15 °, der zwischen der Rührblattlängsachse und der Horizontalebene senkrecht zur Rührerschaftachse eingeschlossen wird, jeweils konstant bleibt. Am Steckbolzenende können z. B. vier Rastelemente vorgesehen sein, die in vier komplementäre, stirnseitige Rastaufnahmen in der Steckbolzenaufnahme eingreifen. Bei dieser Ausführungsform können vier verschiedene Anstellwinkel der Rührblätter bezüglich der Rührernabe realisiert werden. Alternativ kann der Steckbolzen eine polygonale Struktur aufweisen und in einer Steckbolzenaufnahme mit komplementärem polygonalen Aufnahmekanal eingreifen. Bei dieser Ausführungsform können so viele verschiedene Anstellwinkel realisiert werden, wie die Polygonstruktur Ecken aufweist.

Nachteilig bei dieser bekannten Vorrichtung ist, dass insbesondere die Herstellung der Rührblattaufnahme relativ kostenintensiv ist.

Aus der DE 27 02 795 C2 ist eine Befestigung für eine winkeleinstellbare Mischschaufel an einem an einer Welle befestigten Haltearm mit mindestens einer Schrauben-Muttern-Verbindung und mit mindestens einem Schraubloch in der Mischschaufel bekannt, wobei die Schraublochachse in einer Ebene senkrecht zur Haltearmachse liegt. Der Haltearm weist mindestens ein in einer Ebene senkrecht zur Haltearmachse verlaufendes Langloch und parallel zu seiner Achse Rasternuten auf, in welche Raster der Mischschaufel eingreifen. Der Anstellwinkel der Mischschaufel wird durch Lockern der SchraubenMuttern-Verbindung, nachfolgendes Herausheben der Raster aus den Rasternuten und Verstellen der Mischschaufel durch Verdrehen der Mischschaufel auf einer gerundeten Anlagefläche des Haltearms variiert, wobei Gewindebolzen der Schrauben innerhalb der Langlöcher gleiten.

Nachteilig auch bei dieser bekannten Vorrichtung ist, dass insbesondere die Herstellung der Rührblattaufnahme relativ kostenintensiv ist.

Weiterhin ist aus der DE 197 11 019 A1 ein Rührer bekannt, dessen Rührblätter für die Durchführung von Polymerisationsreaktionen variabel in ihren Anstellwinkeln veränderbar sind. Auf einer Antriebshohlwelle sind dabei über zwei Arme, welche sich in einer Kapselung befinden, zwei Rührblätter montiert, deren Neigungswinkel zueinander und bezgl. des Rührschafts über eine arretierbare Steuerwelle, welche sich im Inneren der Antriebshohlwelle befindet, variiert werden können. Die Steuerwelle ist über ein Zahnradgetriebe mit den beiden Armen verbunden.

Nachteilig dabei ist, dass der Rührer insgesamt relativ aufwendig und relativ kostenintensiv ausgebildet ist.

### Aufgabenstellung

Aufgabe der vorliegenden Erfindung ist es daher, die Justierung der Rührblätter an der Rührblattaufnahme eines Rührers bei hoher Genauigkeit zu vereinfachen und kostengünstiger durch Verbesserung der bekannten Vorrichtungen und Verfahren zu gestalten.

### Darlegung der Erfindung

Die Aufgabe bezüglich der Vorrichtung wird in Verbindung mit dem Oberbegriff des Anspruches 1 dadurch gelöst, dass ein Vorrichtungskörper mit einem Aufnahmeelement zur Aufnahme der Rührblattaufnahme mit unfixierten Rührblättern vorgesehen ist, und dass je dem Aufnahmeelement zugewandter Unterfläche der Rührblätter außerhalb der jeweiligen Rührblattachse am Vorrichtungskörper ein Anschlag angeordnet ist, gegen den das jeweilige Rührblatt bei Erreichen seines Anstellwinkels anschlagbar ist.

Durch die Vorrichtung zum Justieren von Rührblättern, deren Vorrichtungskörper kein integraler Bestandteil des Rührers oder der Rührblattaufnahme, z. B. einer Rührernabe, ist, kann die Vorrichtung "mobil" zum Justieren der Rührblätter an verschiedenen Rührblattaufnahmen eingesetzt werden. Der Vorrichtungskörper kann zum Justieren von bereits bekannten und bewährten kostengünstigen Rührern, d.h. zum Justieren von Rührblättern an deren Rührblattaufnahmen, eingesetzt werden. Durch den separaten Vorrichtungskörper, der wiederholt einsetzbar ist, erfolgt trotz gesteigerter Justiergenauigkeit eine Kostenreduzierung.

Gemäß einer bevorzugten Ausführungsform der Erfindung ist das Aufnahmeelement des Vorrichtungskörpers als ein Aufnahmezapfen ausgebildet, auf den die zu justierende Rührblattaufnahme einfach aufsteckbar ist.

Nach einer weiteren bevorzugten Ausführungsform der Erfindung sind die den Rührblättern zugeordneten Anschläge als Anschlagflächen ausgebildet, die gegenüber einer quer zur Längsachse des Aufnahmezapfens angeordneten virtuellen Ebene entsprechend dem vorgesehenen Anstellwinkel geneigt sind, und sind die Unterflächen der Rührblätter mindestens in Teilbereichen an die Anschlagflächen aufliegend anschlagbar. D.h., soweit die Anschlagflächen entsprechend dem vorgesehenen Anstellwinkel geneigt sind, weisen die aufliegend angeschlagenen Unterflächen der Rührblätter den gleichen vorgesehenen Anstellwinkel auf. Dies ergibt eine "automatische" Justierung ohne komplizierte Messvorgänge mit damit verbundenen Messungenauigkeiten.

Gemäß einer weiteren bevorzugten Ausführungsform der Erfindung sind die Anschlagflächen als frei liegende Flächen ausgebildet.

Durch die freiliegenden Anschlagflächen ist die Herstellung und Handhabung der Vorrichtung, d.h. des Vorrichtungskörpers, besonders einfach. Die Rührblattaufnahme mit den unfixierten Rührblättern muss lediglich auf den Aufnahmezapfen aufgesteckt werden, wobei die Unterflächen der Rührblätter an die Anschlagflächen aufliegend anschlagen.

Nach dem Fixieren der Rührblätter kann die Rührblattaufnahme mit den fixierten Rührblättern einfach abgezogen werden. Zur Justierung von Rührblättern mit anderen Anstellwinkeln kann einfach eine entsprechende weitere Vorrichtung verwendet werden.

Es ist aber auch möglich, dass die Vorrichtung neben den als freiliegende Flächen ausgebildeten Anschlagflächen noch Anschlagflächen aufweist, die um einen zweiten vorgesehenen Anstellwinkel geneigt sind. Dann kann eine Vorrichtung für die Justierung von zwei unterschiedlichen Anstellwinkeln genutzt werden.

Nach einer weiteren bevorzugten Ausführungsform der Erfindung sind die Anschlagflächen als Flächen eines Einschnittes zur teilweisen Aufnahme von Rührblättern ausgebildet. Die Ausbildung von Anschlagflächen als Flächen eines Einschnittes ist insbesondere geeignet, wenn eine Vorrichtung zur Justierung zweier oder mehrerer Anstellwinkel geeignet sein soll. Entsprechend würden erste Anschlagflächen eines ersten Einschnittes zur Justierung eines ersten Anstellwinkels und zweite Anschlagflächen eines zweiten Einschnittes zur Justierung eines zweiten Anstellwinkels verwendet werden. Insbesondere ist es auch möglich, erste Anschlagflächen zur Justierung eines ersten Anstellwinkels als freiliegende Anschlagflächen und zweite Anschlagflächen zur Justierung eines zweiten Anstellwinkels als Anschlagflächen eines Einschnittes auszubilden.

Die Aufgabe bezüglich des Verfahrens wird in Verbindung mit dem Oberbegriff des Anspruches 7 dadurch gelöst, dass folgende Schritte durchgeführt werden:
a) Einstecken der Rührblätter mit den freien Enden ihrer Rührblattachsen in die Aufnahmebohrungen ihrer Rührblattaufnahme,
b) Aufstecken der Rührblattaufnahme auf ein Aufnahmeelement eines Vorrichtungskörpers einer Vorrichtung zum Justieren der Rührblätter,
c) Positionieren der Rührblattaufnahme durch Anschlagen der Unterflächen der Rührblätter in ihrem vorgesehen Anstellwinkel jeweils gegen einen korrespondierenden Anschlag des Vorrichtungskörpers,
d) Fixieren der Rührblätter in der Rührblattaufnahme und
e) Entfernen der Rührblattaufnahme aus der Vorrichtung.

Die Rührblätter werden in bekannter Weise mit den freien Enden ihrer Rührblattachsen in die Aufnahmebohrungen der Rührblattaufnahme eingesteckt. Die Rührblattaufnahme wird in einem Folgeschritt einfach auf ein Aufnahmeelement eines Vorrichtungskörpers einer Vorrichtung zum Justieren der Rührblätter aufgesteckt, wobei sich in einem weiteren Folgeschritt die Rührblätter durch Anschlagen ihrer Unterseiten gegen einen korrespondierenden Anschlag des Vorrichtungskörpers praktisch automatisch in ihren vorgesehenen Anstellwinkel justieren. Anschließend werden die Rührblätter der Rührblattaufnahme in bekannter Weise durch Fixieren ihrer Rührblattachsen befestigt und die Rührblattaufnahme mit den in ihr fixierten Rührblättern wird einfach aus der Vorrichtung entfernt.

Gemäß einer bevorzugten Ausführungsform der Erfindung werden im Schritt c) die Unterseiten der Rührblätter durch flächiges Anschlagen gegen die als freiliegende Anschlagflächen ausgebildeten Anschläge positioniert. Dadurch kann mit Schritt e) die Rührblattaufnahme einfach durch Abziehen aus der Vorrichtung entfernt werden.

Nach einer weiteren bevorzugten Ausführungsform der Erfindung werden im Schritt c) die dem Vorrichtungskörper zugewandten Enden der Rührblätter in korrespondierende Einschnitte des Vorrichtungskörpers eingesteckt und die Rührblätter durch flächiges Anschlagen ihrer Unterseiten gegen von den Einschnitten gebildete Anschlagflächen positioniert.

Soweit die Enden der Rührblätter in korrespondierende Einschnitte des Vorrichtungskörpers eingesteckt werden, wird im Schritt e) die Rührblattaufnahme durch eine wendelförmige Drehbewegung aus der Vorrichtung entfernt.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

- Figur 1:: eine Seitenansicht einer Vorrichtung zum Justieren von Rührblättern mit aufgesteckter Rührblattaufnahme eines Rührers mit im vorgesehenen Anstellwinkel angeschlagenen Rührblättern,
- Figur 2:: eine Seitenansicht der Rührblattaufnahme von Figur 1,
- Figur 3:: eine räumliche Darstellung einer Vorrichtung zum Justieren von Rührblättern mit freiliegenden Anschlagflächen,
- Figur 4:: eine Draufsicht auf die Rührblattaufnahme von Figur 2,
- Figur 5:: eine Seitenansicht einer weiteren Vorrichtung zum Justieren von Rührblättern mit freiliegenden Anschlagflächen geneigt um einen ersten Anstellwinkel und Einschnitten, deren Anschlagflächen um einen zweiten Anstellwinkel geneigt sind;
- Figur 6:: eine Seitenansicht der Vorrichtung von Figur 5 mit aufgesteckter Rührblattaufnahme und Rührblättern, die um einen ersten Anstellwinkel geneigt sind,
- Figur 7:: eine Seitenansicht der Vorrichtung zum Justieren von Rührblättern von Figur 5 mit aufgesteckter Rührblattaufnahme und Rührblättern, die um einen zweiten Anstellwinkel geneigt sind und in die Einschnitte der Vorrichtung eingreifen;
- Figur 8:: eine Seitenansicht einer weiteren Vorrichtung zum Justieren von Rührblättern mit Einschnitten, deren Anschlagflächen um einen ersten Anstellwinkel geneigt sind, und Einschnitten, deren Anschlagflächen um einen zweiten Anstellwinkel geneigt sind;
- Figur 9:: eine Seitenansicht der Vorrichtung zum Justieren von Rührblättern von Figur 8 mit aufgesetzter Rührblattaufnahme und Rührblättern, die um einen ersten Anstellwinkel geneigt sind, und
- Figur 10:: eine Seitansicht der Vorrichtung zum Justieren von Rührblättern von Figur 8 mit aufgesetzter Rührblattaufnahme und Rührblättern, die um einen zweiten Anstellwinkel geneigt sind und in die zweiten Einschnitte eingreifen.

### Beschreibung bevorzugter Ausführungsformen

Eine Vorrichtung 1 zum Justieren von Rührblättern 2 besteht im Wesentlichen aus einem Vorrichtungskörper 3 mit einem Aufnahmeelement 4 und Anschlägen 5. Eine Rührblattaufnahme 6 zur Aufnahme der Rührblätter 2 besteht in bekannter Weise aus einem ringförmigen Element 7 mit einer zentralen Öffnung 8 zur Befestigung an einer nur als Symmetrieachse dargestellten Rotationsachse 9 eines Rührers. Quer zur Rotationsachse 9 weist das ringförmige Element 7 radiale Bohrungen 10 zur Aufnahme eines freien Endes der mit dem Rührblatt 2 verbundenen Rührblattachse 11 auf. Über Fixierschrauben 12 können die Rührblätter 2 mit ihren Rührblattachsen 11 in den radialen Aufnahmebohrungen 10 des Elementes 7 fixiert werden.

Gegenüber einer quer zur Rotationsachse 9 des Rührers angeordneten virtuellen Ebene 13 werden die Rührblätter 2 in einem vorgesehenen ersten Anstellwinkel 14 oder einem zweiten Anstellwinkel 15 justiert.

Entsprechend den Ausführungsbeispielen weisen die Vorrichtungskörper 3 als Aufnahmeelement 4 jeweils einen Aufnahmezapfen 16 auf, auf den das ringförmige Element 7 der Rührblattaufnahme 6 mit seiner zentralen Öffnung 8 aufsteckbar ist. Der Aufnahmezapfen 16 weist eine Längsachse 17 auf, die bei aufgesteckter Rührblattaufnahme 6 mit deren Rotationsachse 9 zusammenfällt.

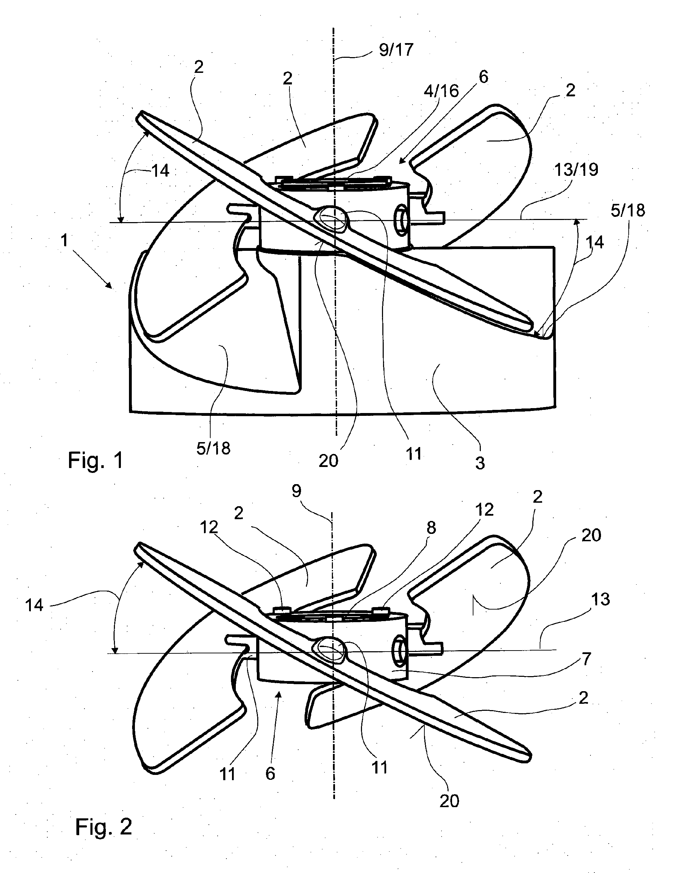

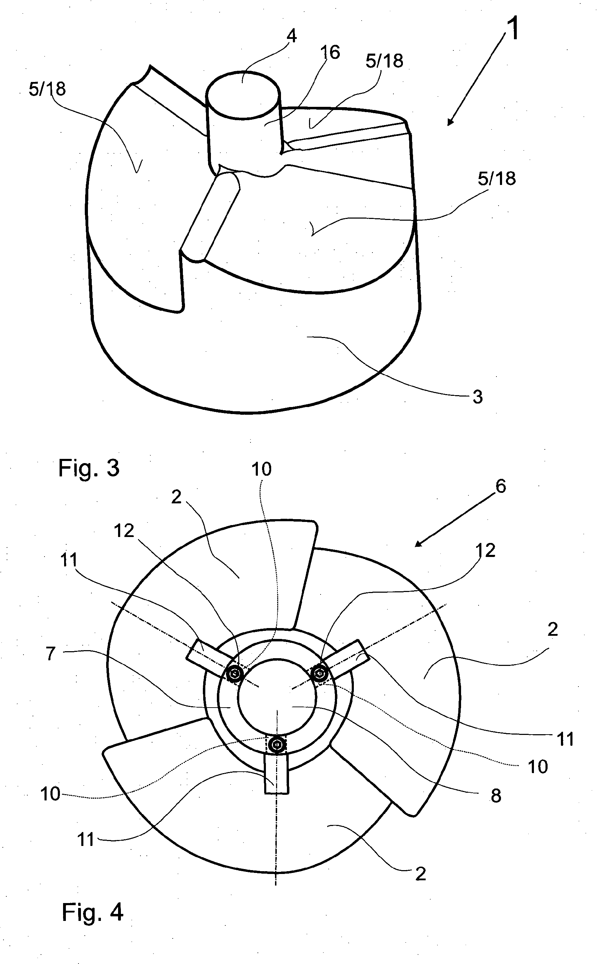

Entsprechend den Ausführungsbeispielen der Figuren 1, 3 und 5 bis 7 weisen die Vorrichtungskörper 3, 3' Anschläge 5 auf, die als freiliegende Anschlagflächen 18, 18' ausgebildet sind. Die freiliegenden Anschlagflächen 18, 18' sind gegenüber einer quer zur Längsachse 17 angeordneten virtuellen Ebene 19 entsprechend dem vorgesehenen ersten Anstellwinkel 14 geneigt, sodass die Rührblätter 2 mit ihrer Unterfläche 20 im Bereich der Anschlagflächen 18, 18' aufliegend anschlagen und damit um den Anstellwinkel 14 geneigt sind, nachdem die Rührblattaufnahme 6 mit den unfixierten, d. h. mit in die radialen Aufnahmebohrungen 10 ohne Fixierung durch Schrauben lose eingesteckten, Rührblättern 2 auf das Aufnahmeelement 4 aufgesteckt worden ist. Sobald die Rührblätter 2 im gewünschten Anstellwinkel 14 positioniert sind, werden diese durch manuelles Festschrauben in den radialen Aufnahmebohrungen 10 im vorgegebenen Anstellwinkel 14 fixiert.

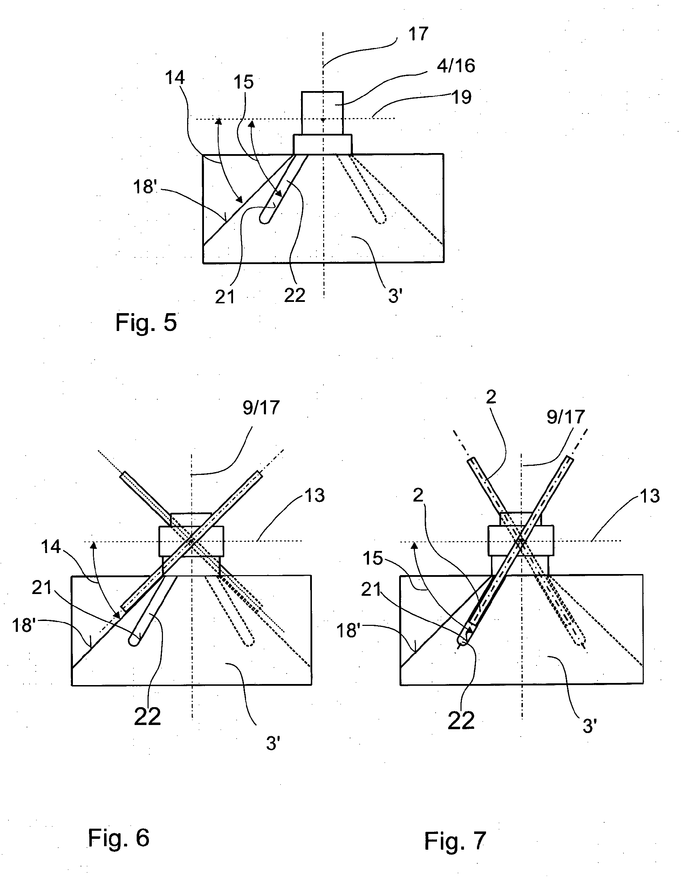

Entsprechend zu den Ausführungsbeispielen der Figur 5 bis 7 sind zusätzlich zu den ersten Anschlagflächen 18' zweite Anschlagflächen 21 als Teil von Einschnitten 22 vorgesehen, die gegenüber der virtuellen Ebene 19 um den zweiten vorgesehenen Anstellwinkel 15 geneigt sind.

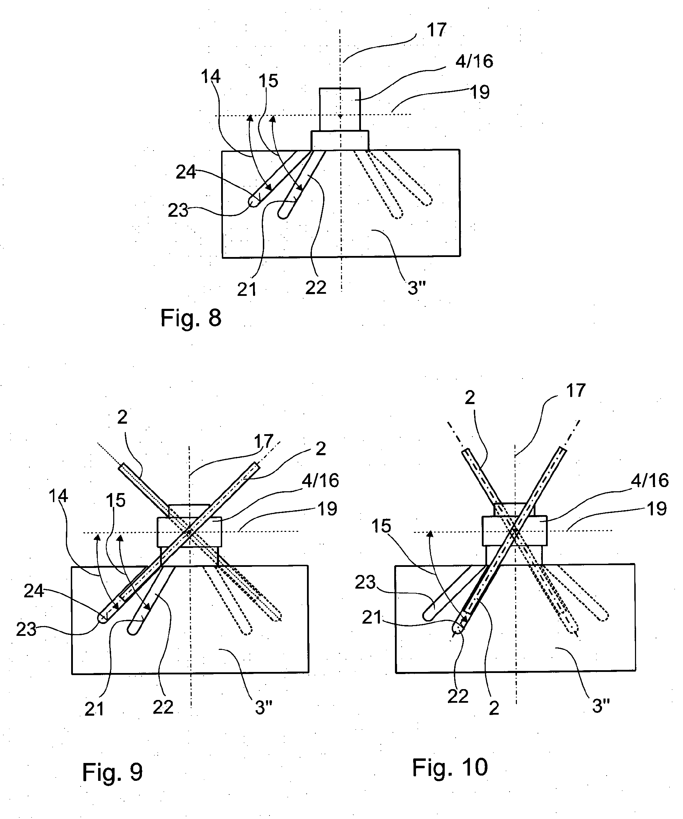

Entsprechend den Ausführungsbeispielen der Figuren 8 bis 10 weist der Vorrichtungskörper 3" neben den Einschnitten 22 einen Einschnitt 23 mit ersten Anschlagflächen 24 auf, die gegenüber der virtuellen Ebene 19 um den ersten vorgesehenen Anstellwinkel 14 geneigt sind.

In den Ausführungsbeispielen betragen die ersten Anstellwinkel 14 30°, während die zweiten Anstellwinkel 15 45° betragen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere müssen die Anschläge 5 nicht unbedingt flächig ausgebildet sein. Sie können beispielsweise auch als Enden von Stellschrauben ausgebildet sein. Beispielsweise können auch mehr als zwei Einschnitte 22, 23 vorgesehen sein. Auch können unterschiedliche Rührblattaufnahmen 6 verwendet werden, so können diese neben zwei und drei Rührblättern 2 auch vier oder fünf Rührblätter 2 und mehr aufweisen.

### Bezugszeichenliste

- 1: Vorrichtung
- 2: Rührblatt
- 3, 3', 3": Vorrichtungskörper
- 4: Aufnahmeelement
- 5: Anschlag
- 6: Rührblattaufnahme
- 7: ringförmiges Element von 6
- 8: zentr. Öffnung von 7
- 9: Rotationsachse
- 10: radiale Aufnahmebohrung von 7
- 11: Rührblattachse
- 12: Fixierschraube
- 13: virtuelle Ebene
- 14: erster Anstellwinkel
- 15: zweiter Anstellwinkel
- 16: Aufnahmezapfen von 4
- 17: Längsachse von 16
- 18, 18': (freiliegende) Anschlagfläche von 5
- 19: virtuelle Ebene von 3, 3', 3"
- 20: Unterfläche von 2
- 21: zweite Anschlagfläche von 22
- 22: Einschnitt
- 23: Einschnitt
- 24: erste Anschlagfläche von 23

## Patentansprüche

1. Vorrichtung (1) zum Justieren von Rührblättern (2) an einer Rührblattaufnahme (6) eines Rührers, die mit einer Rührblattachse (11) in quer zu einer Rotationsachse (9) angeordneten Aufnahmebohrungen (10) der Rührblattaufnahme (6) in einem vorgesehenen Anstellwinkel (14, 15) gegenüber einer quer zur Rotationsachse des Rührers angeordneten virtuellen Ebene (13) fixierbar sind,
**dadurch gekennzeichnet,**
**dass** ein Vorrichtungskörper (3, 3', 3") mit einem Aufnahmeelement (4) zur Aufnahme der Rührblattaufnahme (6) mit unfixierten Rührblättern (2) vorgesehen ist, und
**dass** je dem Aufnahmeelement (4) zugewandter Unterfläche (20) der Rührblätter (2) außerhalb der jeweiligen Rührblattachse (11) am Vorrichtungskörper (3, 3', 3") ein Anschlag (5) angeordnet ist, gegen den das jeweilige Rührblatt bei Erreichen seines Anstellwinkels (14, 15) anschlagbar ist.

2. Vorrichtung nach Anspruch 1,
**dadurch gekennzeichnet,**
**dass** das Aufnahmeelement (4) als ein Aufnahmezapfen (16) ausgebildet ist, auf den die Rührblattaufnahme (6) aufsteckbar ist.

3. Vorrichtung nach Anspruch 1 oder 2,
**dadurch gekennzeichnet,**
**dass** die den Rührblättern (2) zugeordneten Anschläge (5) als Anschlagflächen (18, 18', 21, 24) ausgebildet sind, die gegenüber einer quer zur Längsachse (17) des Aufnahmezapfens (16) angeordneten virtuellen Ebene (19) entsprechend dem vorgesehenen Anstellwinkel (14, 15) geneigt sind, und
**dass** die Unterflächen (20) der Rührblätter (2) mindestens in Teilbereichen an die Anschlagflächen (18, 18', 21, 24) aufliegend anschlagbar sind.

4. Vorrichtung nach Anspruch 3,
**dadurch gekennzeichnet,**
**dass** die Anschlagflächen (18, 18') als freiliegende Flächen ausgebildet sind.

5. Vorrichtung nach Anspruch 3 oder 4,
**dadurch gekennzeichnet,**
**dass** die Anschlagflächen (21, 24) als Flächen eines Einschnittes (22, 23) zur teilweisen Aufnahme von Rührblättern ausgebildet sind.

6. Vorrichtung nach einem der Ansprüche 3 bis 5,
**dadurch gekennzeichnet,**
**dass** erste Anschlagflächen (18, 18', 24) zur Justierung eines ersten Anstellwinkels (14) und zweite Anschlagflächen (21) zur Justierung eines zweiten Anstellwinkels (15) vorgesehen sind.

7. Verfahren zum Justieren von an einer Rührblattaufnahme (6) eines Rührers anzuordnenden Rührblättern (2), die mit einer Rührblattachse (11) in quer zu einer Rotationsachse (9) angeordneten Aufnahmebohrungen (10) der Rührblattaufnahme (6) in einem vorgesehenen Anstellwinkel (14, 15) gegenüber einer quer zur Rotationsachse (9) angeordneten virtuellen Ebene (13) fixiert werden, **dadurch gekennzeichnet,**
**dass** folgende Schritte durchgeführt werden:
a) Einstecken der Rührblätter (2) mit den freien Enden ihrer Rührblattachsen (11) in die Aufnahmebohrungen (10) der Rührblattaufnahme (6),
b) Aufstecken der Rührblattaufnahme (6) auf ein Aufnahmeelement (4) eines Vorrichtungskörpers (3, 3', 3") einer Vorrichtung (1) zum Justieren der Rührblätter (2),
c) Positionieren der Rührblattaufnahme (6) durch Anschlagen der Unterflächen (20) der Rührblätter (2) in ihrem vorgesehenen Anstellwinkel (14, 15) jeweils gegen einen korrespondierenden Anschlag (5) des Vorrichtungskörpers (3, 3',3"),
d) Fixieren der Rührblätter (2) in der Rührblattaufnahme (6), und
e) Entfernen der Rührblattaufnahme (6) aus der Vorrichtung (1).

8. Verfahren nach Anspruch 7,
**dadurch gekennzeichnet,**
**dass** im Schritt c) die Unterflächen (20) der Rührblätter (2) durch flächiges Anschlagen gegen als freiliegende Anschlagflächen (18, 18') ausgebildete Anschläge (5) positioniert werden.

9. Verfahren nach Anspruch 8,
**dadurch gekennzeichnet,**
**dass** im Schritt e) die Rührblattaufnahme (6) durch Abziehen aus der Vorrichtung (1) entfernt wird.

10. Verfahren nach Anspruch 7,
**dadurch gekennzeichnet,**
**dass** im Schritt c) die dem Vorrichtungskörper (3', 3") zugewandten Enden der Rührblätter in korrespondierende Einschnitte (22, 23) des Vorrichtungskörpers (3', 3") eingesteckt und die Rührblätter (2) durch flächiges Anschlagen ihrer Unterflächen (20) gegen von den Einschnitten (22, 23) gebildete Anschlagflächen (21, 24) positioniert werden.

11. Verfahren nach Anspruch 10,
**dadurch gekennzeichnet,**
**dass** im Schritt e) die Rührblattaufnahme (6) durch eine wendelförmige Drehbewegung aus der Vorrichtung (1) entfernt wird.

## Claims

1. Device (1) for adjusting stirring blades (2) at a stirring blade mount (6) of a stirrer, which are fixable by a stirring blade axle (11) in receiving bores (10), which are arranged transversely to an axis (9) of rotation, of the stirring blade mount (6) at an intended angle (14, 15) of incidence relative to a virtual plane (13) arranged transversely to the axis of rotation of the stirrer,
**characterised in that**
a device body (3, 3', 3") is provided with a receiving element (4) for reception of the stirring blade mount (6) with unfixed stirring blades (2) and
a respective abutment (5) is arranged at the device body (3, 3', 3") for each lower surface (20), which faces the receiving element (4), of the stirring blades (2) outside the respective stirring blade axle (11), against which abutment the respective stirring blade is able to abut on attainment of its angle (14, 15) of incidence.

2. Device according to claim 1, **characterised in that** the receiving element (4) is constructed as a receiving pin (16) onto which the stirring blade mount (6) can be plugged.

3. Device according to claim 1 or 2, **characterised in that** the abutments (5) associated with the stirring blades (2) are constructed as abutment surfaces (18, 18', 21, 24) inclined relative to a virtual plane (19), which is arranged transversely to the longitudinal axis (17) of the receiving pin (16), in correspondence with the intended angle (14, 15) of incidence and that the lower surfaces (20) of the stirring blades (2) at least in sub-regions can rest in abutment against the abutment surfaces (18, 18', 21, 24).

4. Device according to claim 3, **characterised in that** the abutment surfaces (18, 18') are constructed as exposed surfaces.

5. Device according to claim 3 or 4, **characterised in that** the abutment surfaces (21, 24) are formed as surfaces of an incision (22, 23) for partial reception of stirring blades.

6. Device according to any one of claims 3 to 5, **characterised in that** first abutment surfaces (18, 18', 24) for adjustment of a first angle (14) of incidence and second abutment surfaces (21) for adjustment of a second angle (15) of incidence are provided.

7. Method of adjusting stirring blades (2), which are to be arranged at a stirring blade mount (6) of a stirrer and which are fixed by a stirring blade axle (11) in receiving bores (10), which are arranged transversely to an axis (9) of rotation, of the stirring blade mount (6) at an intended angle (14, 15) of incidence relative to a virtual plane (13) arranged transversely to the axis (9) of rotation, **characterised in that** the following steps are carried out:
a) insertion of the stirring blades (2) by the free ends of the stirring blade axles (11) thereof into the receiving bores (10) of the stirring blade mount (6),
b) plugging the stirring blade mount (6) onto a receiving element (4) of a device body (3, 3', 3") of a device (1) for adjusting the stirring blades (2),
c) positioning the stirring blade mount (6) by abutment of each of the lower surfaces (20) of the stirring blades (2) at the intended angle (14, 15) of incidence thereof against a corresponding abutment (5) of the device body (3, 3', 3"),
d) fixing the stirring blades (2) in the stirring blade mount (6) and
e) removing the stirring blade mount (6) from the device (1).

8. Method according to claim 7, **characterised in that** in step c) the lower surfaces (20) of the stirring blades (2) are positioned by area abutting against abutments (5) formed as exposed abutment surfaces (18, 18').

9. Method according to claim 8, **characterised in that** in step e) the stirring blade mount (6) is removed by withdrawal from the device (1).

10. Method according to claim 7, **characterised in that** in step c) the ends, which face the device body (3', 3"), of the stirring blades are inserted into corresponding incisions (22, 23) of the device body (3', 3") and the stirring blades (2) are positioned by area abutting of the lower surfaces (20) thereof against abutment surfaces (21, 24) formed by the incisions (22, 23).

11. Method according to claim 10, **characterised in that** in step e) the stirring blade mount (6) is removed from the device (1) by a helical turning movement.

## Revendications

1. Dispositif (1) pour l'ajustement de pales d'agitation (2) dans un logement de pales d'agitation (6) d'un agitateur, qui peuvent être fixées avec un axe de pales d'agitation (11) dans des alésages de logement (10) du logement de pales d'agitation (6), disposés transversalement par rapport à un axe de rotation (9), avec un angle d'attaque (14, 15) prévu par rapport à un plan virtuel (13) disposé transversalement par rapport à l'axe de rotation de l'agitateur,
**caractérisé en ce que**
un corps de dispositif (3, 3', 3") est prévu avec un élément de logement (4) pour le logement du logement de pales d'agitation (6) avec des pales d'agitation (2) non fixées, et
pour chaque surface inférieure (20) des pales d'agitation (2) orientée vers l'élément de logement (4), hors de l'axe de pale d'agitation (11) correspondante sur le corps de dispositif (3, 3', 3"), se trouve une butée (5) contre laquelle la pale d'agitation correspondante peut buter lorsque son angle d'attaque (14, 15) est atteint.

2. Dispositif selon la revendication 1,
**caractérisé en ce que**
l'élément de logement (4) est conçu comme un tenon de logement (16) sur lequel le logement de pale d'agitation (6) peut être emboîté.

3. Dispositif selon la revendication 1 ou 2,
**caractérisé en ce que**
les butées (5) correspondant aux pales d'agitation (2) sont conçues comme des surfaces de butée (18, 18', 21, 24), qui sont inclinées, par rapport à un plan virtuel (19) disposé transversalement par rapport à l'axe longitudinal (17) du tenon de logement (16), de manière correspondante à l'angle d'attaque (14, 15) prévu, et
les surfaces inférieures (20) des pales d'agitation (2) peuvent buter en reposant dans au moins des zones partielles sur les surfaces de butée (18, 18', 21, 24).

4. Dispositif selon la revendication 3,
**caractérisé en ce que**
les surfaces de butée (18, 18') sont conçues comme des surfaces libres.

5. Dispositif selon la revendication 3 ou 4,
**caractérisé en ce que**
les surfaces de butée (21, 24) sont conçues comme des surfaces d'une encoche (22, 23) pour le logement partiel de pales d'agitation.

6. Dispositif selon l'une des revendications 3 à 5,
**caractérisé en ce que**
des premières surfaces de butée (18, 18', 24) pour l'ajustement d'un premier angle d'attaque (14) et des deuxièmes surfaces de butée (21) pour l'ajustement d'un deuxième angle d'attaque (15) sont prévues.

7. Procédé pour l'ajustement de pales d'agitation (2) à disposer sur un logement de pales d'agitation (6) d'un agitateur, qui sont fixées avec un axe de pale d'agitation (11) dans les alésages de logement (10) du logement de pales d'agitation (6), disposés transversalement par rapport à un axe de rotation (9), avec un angle d'attaque (14, 15) prévu par rapport à un plan virtuel (13) disposé transversalement par rapport à l'axe de rotation (9),
**caractérisé en ce que**
les étapes suivantes sont exécutées :
a) emboîtement des pales d'agitation (2) avec les extrémités libres de leurs axes de pales d'agitation (11) dans les alésages de logement (10) du logement de pales d'agitation (6),
b) emboîtement du logement de pales d'agitation (6) sur un élément de logement (4) d'un corps de dispositif (3, 3', 3") d'un dispositif (1) pour l'ajustement des pales d'agitation (2),
c) positionnement du logement de pales d'agitation (6) par butée des surfaces inférieures (20) des pales d'agitation (2) avec leur angle d'attaque (14, 15) prévu contre une butée (5) correspondante du corps de dispositif (3, 3', 3"),
d) fixation des pales d'agitation (2) dans le logement de pales d'agitation (6), et
e) retrait du logement de pales d'agitation (6) hors du dispositif (1).

8. Procédé selon la revendication 7,
**caractérisé en ce que**
à l'étape c), les surfaces inférieures (20) des pales d'agitation (2) sont positionnées par butée à plat contre des butées (5) conçues comme des surfaces de butée libres (18, 18').

9. Procédé selon la revendication 8,
**caractérisé en ce que**
à l'étape e), le logement de pales d'agitation (6) est retiré par retrait hors du dispositif (1).

10. Procédé selon la revendication 7,
**caractérisé en ce que**
à l'étape c), les extrémités des pales d'agitation, orientées vers le corps de dispositif (3', 3") sont insérées dans des encoches (22, 23) correspondantes du corps de dispositif (3', 3") et les pales d'agitation (2) sont positionnées par butée à plat de leurs surfaces inférieures (20) contre les surfaces de butée (21, 24) formées par les encoches (22, 23).

11. Procédé selon la revendication 10,
**caractérisé en ce que**
à l'étape e), le logement de pales, d'agitation (6) est retiré hors du dispositif (1) à l'aide d'un mouvement de rotation hélicoïdal.
